# EUROPÄISCHE PATENTSCHRIFT

(11) **EP 3 372 319 B1**
(45) Veröffentlichungstag und Bekanntmachung des Hinweises auf die Patenterteilung: **30.10.2019**
(21) Anmeldenummer: 18160705.2
(22) Anmeldetag: 08.03.2018
(51) Int. Cl.: B21D 5/02, B21D 55/00

(54) **SICHERHEITSSYSTEM FÜR EINE FERTIGUNGSANLAGE UND EINE SOLCHE FERTIGUNGSANLAGE**
SAFETY SYSTEM FOR A PRODUCTION SYSTEM AND SUCH A PRODUCTION SYTEM
SYSTÈME DE SÉCURITÉ POUR UNE INSTALLATION DE FABRICATION ET UNE TELLE INSTALLATION DE FABRICATION

(30) Priorität: 09.03.2017 AT 501862017
(43) Veröffentlichungstag der Anmeldung: 12.09.2018
(73) Patentinhaber: TRUMPF Maschinen Austria GmbH & Co. KG., 4061 Pasching (AT)
(72) Erfinder: AUZINGER, Michael, 4040 Linz (AT); DENKMEIER, Thomas, 4050 Traun (AT); HASELBÖCK, Alfred, 4153 Peilstein (AT); SECIBOVIC, Kabir, 4623 Gunskirchen (AT)
(74) Vertreter: Burger, Hannes

(56) Entgegenhaltungen:
- EP-A1- 2 431 650
- EP-A2- 1 515 078
- WO-A1-97/25568
- WO-A1-2006/135961

## Beschreibung

Die Erfindung betrifft ein Sicherheitssystem für eine Fertigungsanlage zum Freibiegen oder Prägebiegen von einem aus einem Blech zu fertigenden Werkstück mittels einer Biegepresse sowie eine Fertigungsanlage mit einem derartigen Sicherheitssystem, wie z. B. bekannt aus dem Dokument EP 2 431 650 A1.

Bei bisherigen bekannten Sicherheitssystemen wurden die Sendevorrichtung und die Erfassungsvorrichtung jeweils verstellbar an fest mit dem oberen Pressbalken verbundenen Haltearmen gehalten. Eine Veränderung der relativen Lage der Sendevorrichtung sowie der Erfassungsvorrichtung bezüglich des oberen Pressbalkens erfolgte nur zu Einstell- und Justiertätigkeiten, ansonsten erfolgte eine starre Befestigung am oberen Pressbalken und damit verbunden eine fixe Mitverstellung mit diesem. Nachteilig dabei ist, dass bei einer Kollision der Sendevorrichtung und/oder der Erfassungsvorrichtung im Zuge des Absenkvorgangs für die Durchführung des Biegevorgangs die Befestigungsvorrichtung unnachgiebig und überwiegend starr ausgebildet war. Damit konnten größere Druckkräfte von der Sendevorrichtung und/oder der Erfassungsvorrichtung auf Körperteile übertragen werden, was entweder zu Beschädigungen der Sendevorrichtung und/oder der Erfassungsvorrichtung führte. Es konnte auch zu Verletzungen der Bedienperson führen.

Aufgabe der vorliegenden Erfindung war es, die Nachteile des Standes der Technik zu überwinden und ein Sicherheitssystem sowie eine Fertigungsanlage mit einem derartigen Sicherheitssystem zur Verfügung zu stellen, und dabei von diesem eine Klemmgefahr vermieden wird und das Sicherheitssystem darüber hinaus einen einfachen Aufbau bei geringem Platzbedarf aufweist.

Diese Aufgabe wird durch ein Sicherungssystem für eine Fertigungsanlage sowie eine mit einem derartigen Sicherungssystem ausgestattete Fertigungsanlage gemäß den Ansprüchen gelöst.

Das erfindungsgemäße Sicherheitssystem ist für eine Fertigungsanlage zum Freibiegen oder Prägebiegen von einem aus einem Blech zu fertigenden Werkstück mittels einer Biegepresse vorgesehen und kann zumindest folgende Bauteilkomponenten umfassen:
- eine Sendevorrichtung zur Emittierung zumindest eines Lichtstrahls,
- eine Erfassungsvorrichtung zum Empfangen des zumindest einen Lichtstrahls,
- eine Befestigungseinheit mit je einer Befestigungsvorrichtung für die Sendevorrichtung und die Erfassungsvorrichtung zum Befestigen der Sendevorrichtung und der Erfassungsvorrichtung in voneinander beabstandeten Stirnendbereich eines oberen Pressbalkens der Biegepresse, wobei
- die Befestigungsvorrichtung zumindest ein Halteelement umfasst, welches zumindest eine Halteelement biegeschlaff und länglich ausgebildet ist und in seiner Längserstreckung voneinander distanziert einen ersten Endbereich und einen zweiten Endbereich aufweist, und
- die Befestigungsvorrichtung weiters eine Stellscheibe umfasst, welche Stellscheibe oberhalb, insbesondere in vertikaler Richtung oberhalb, der Sendevorrichtung oder der Erfassungsvorrichtung ortsfest angeordnet ist, und die Stellscheibe um eine Drehachse mit einer horizontalen Ausrichtung drehbar ist, und
- der erste Endbereich des zumindest einen Halteelements mit der Sendevorrichtung oder der Erfassungsvorrichtung verbunden ist, und
- das zumindest eine Halteelement an der Stellscheibe abgelenkt oder umgelenkt ist und wobei
- der zweite Endbereich des zumindest einen Halteelements mit einem Gegengewichtskörper oder mit einem an einem Ankerpunkt ortsfest gehaltenen elastischen Zugelement verbunden ist.

Der dadurch erzielte Vorteil liegt darin, dass durch die Wahl der biegeschlaffen Aufhängung der Sendevorrichtung oder der Erfassungsvorrichtung eine sichere hängende Positionierung seitlich neben dem Pressbalken erzielt werden kann. Es kann jedoch keine zwangsläufige Druckkraft ausgehend vom oberen Pressbalken über das biegeschlaffe Halteelement hin auf die Sendevorrichtung oder die Erfassungsvorrichtung bei einer Kollision derselben mit einem Körper auf diese übertragen werden. Dies stellt eine hohe Sicherheitsfunktion dar, um ein Einklemmen eines Körperteils und damit einhergehende Verletzungen zu vermeiden. Durch das Vorsehen einer Stellscheibe und das Ablenken oder Umlenken des Halteelements an dieser, kann zusätzlich noch ein Justiervorgang ausgehend von der Stellscheibe hin auf das Halteelement und in weiterer Folge auf die Sendevorrichtung oder die Erfassungsvorrichtung durchgeführt werden. Damit kann die Anpassung des Überwachungsbereichs der Sicherheitsvorrichtung an sich ändernde Werkzeuggeometrien des Biegewerkzeugs angepasst werden.

Weiters kann durch das Ablenken oder Umlenken des Halteelements an der Stellscheibe und durch das Zusammenwirken des Halteelements mit dem Gegengewichtskörper oder dem elastischen Zugelement zwischen dem Halteelement und der Stellscheibe eine Haftreibungskraft aufgebaut werden. Der Wert der aufgebauten Haftreibungskraft kann durch das Ausmaß des Umschlingungswinkels und des Reibungskoeffizienten, insbesondere des Haftreibungskoeffizienten, festgelegt und bestimmt werden. Dadurch, dass das Halteelement ausschließlich zum Übertragen von Zugkräften ausgebildet ist und eine Übertragung von Druckkräften nicht vorgesehen bzw. ausgeschlossen ist, kann so eine mechanische Klemmung ausgehend von der Sendevorrichtung oder der Erfassungsvorrichtung mit einem in dem Verstellweg ragenden Körperteil und einem feststehenden Bauteil der Biegepresse verhindert werden.

Weiters kann es vorteilhaft sein, wenn das zumindest eine Halteelement zugsteif, insbesondere dehnungsfest, ausgebildet ist. Damit kann eine exakte Positionierung der Sendevorrichtung und/oder der Erfassungsvorrichtung mittels des Halteelements relativ bezüglich des Pressbalkens, insbesondere dem oder den daran angeordneten Biegestempeln erzielt werden.

Eine andere Ausführungsform zeichnet sich dadurch aus, dass das zumindest eine Halteelement aus der Gruppe von Seilen, Riemen, Bändern, Schüren, Ketten ausgewählt ist. Dadurch kann eine einfache Anpassung an unterschiedliche Betriebsbedingungen und der damit in Antriebsverbindung stehenden Stellscheibe erzielt werden.

Eine weitere mögliche Ausführungsform hat die Merkmale, dass der Gegengewichtskörper eine Eigenmasse aufweist, welche gleich oder kleiner der Eigenmasse der Sendevorrichtung oder der Erfassungsvorrichtung ist. Damit können bis hin zum Gleichgewichtszustand an beiden an der Stellscheibe abgelenkten oder umgelenkten Teilabschnitten des Halteelements unterschiedliche Lastverhältnisse realisiert werden.

Eine weitere Ausbildung sieht vor, dass das elastische Zugelement aus der Gruppe von Rollfeder, Spiralfeder, Schraubenfeder, Gummiband, Gasfeder, Pneumatikzylinder, Hydraulikzylinder ausgewählt ist. Damit kann einfach die vom elastischen Zugelement aufgebaute Zugwirkung oder Zugkraft auf den zweiten Endbereich des Halteelements an unterschiedliche Einsatzbedingungen angepasst werden. Werden Pneumatikzylinder und/oder Hydraulikzylinder eingesetzt, ist es vorteilhaft, wenn diese nicht eigens angesteuert sind, sondern nur vorgespannt sind.

Eine andere Ausführungsform zeichnet sich dadurch aus, dass die Stellscheibe mit einer Antriebsvorrichtung in Antriebsverbindung steht. Durch das Vorsehen einer Antriebsvorrichtung für die Stellscheibe kann so zusätzlich zur Umlenkung oder Ablenkung des Halteelements auch eine Verstellbewegung und damit verbunden eine vertikale Relativverstellung bezüglich des oberen Pressbalkens durchgeführt werden.

Eine weitere bevorzugte Ausführungsform ist dadurch gekennzeichnet, dass die Befestigungsvorrichtung zusätzlich zur Stellscheibe eine Umlenkscheibe umfasst, an welcher Umlenkscheibe das zumindest eine Halteelement ebenfalls abgelenkt oder umgelenkt ist. Durch das Vorsehen einer zusätzlichen Umlenkscheibe kann der Umschlingungswinkel des Halteelements an der Stellscheibe durch entsprechende Anordnung zueinander einfach variiert werden. Durch das Ausmaß des Umschlingungswinkels kann in Verbindung mit dem Haftreibungskoeffizienten jene Gegenkraft ermittelt oder festgelegt werden, mit welcher die Sendevorrichtung oder die Erfassungsvorrichtung entlastet werden muss, bis es zu einem Rutschen des Halteelements an der Stellscheibe kommt. Durch dieses Entlasten wird auch die Haftreibungskraft verringert und es kommt in weiterer Folge zu einem Rutschen des Halteelements an der rotatorisch ansonsten feststehenden Stellscheibe.

Weiters kann es vorteilhaft sein, wenn die Umlenkscheibe bezüglich des Längsverlaufes des zumindest einen Halteelements zwischen seinem ersten Endbereich und seinem zweiten Endbereich der Stellscheibe vorgeordnet ist. Dadurch können ausgehend von der Erfassungsvorrichtung oder ausgehend von der Sendevorrichtung über das Halteelement keine Schwingungen direkt auf die Stellscheibe übertragen werden.

Eine weitere alternative Ausführungsform ist dadurch gekennzeichnet, dass die Umlenkscheibe bezüglich des Längsverlaufes des zumindest einen Halteelements zwischen seinem ersten Endbereich und seinem zweiten Endbereich der Stellscheibe nachgeordnet ist. Durch das Nachordnen der Umlenkscheibe bezüglich der Stellscheibe kann in diesem Fall auch je nach relativer vertikaler Lage zueinander das Ausmaß des Umschlingungswinkels und damit verbunden der aufgebauten Haftreibungskraft festgelegt werden.

Eine andere alternative Ausführungsform zeichnet sich dadurch aus, dass sowohl die Stellscheibe als auch die Umlenkscheibe bezüglich des Längsverlaufes des zumindest einen Halteelements zwischen seinem ersten Endbereich und seinem zweiten Endbereich auf der gleichen Seite des Halteelements angeordnet sind. Dadurch erfolgt stets ein Ablenken in einem umfangsmäßig gesehenen gleichen Ablenkungssinn, wodurch stets sowohl die Stellscheibe als auch die Umlenkscheibe innerhalb der zwischen den beiden Endbereichen befindlichen Umschlingungsfläche angeordnet sind.

Eine weitere mögliche und gegebenenfalls alternative Ausführungsform hat die Merkmale, dass die Befestigungsvorrichtung weiters eine Führungsvorrichtung umfasst, mittels welcher Führungsvorrichtung die Sendevorrichtung oder die Erfassungsvorrichtung geführt, insbesondere in vertikaler Richtung geführt, ist. Durch das Vorsehen einer Führungsvorrichtung kann die Sendevorrichtung oder die Erfassungsvorrichtung exakt relativ bezüglich des Pressbalkens geführt werden. Weiters können damit aber auch aufgrund der hängenden Anordnung Pendelvorgänge der aufgehängten Sendevorrichtung oder der Erfassungsvorrichtung vermieden werden. Damit kann die Gesamtsicherheit zusätzlich noch erhöht oder verbessert werden.

Die Erfindung betrifft aber auch noch eine Fertigungsanlage, insbesondere für das Freibiegen oder Prägebiegen von einem aus einem Blech zu fertigenden Werkstück, wobei die Fertigungsanlage zumindest folgende Bauteilkomponenten und/oder Bauteilgruppen umfassen kann:
- eine Biegepresse, insbesondere Abkantpresse, mit einem Maschinengestell, einem unteren Pressbalken, einem oberen Pressbalken sowie an den Pressbalken angeordneten oder ausgebildeten Werkzeugaufnahmen,
- zumindest ein Biegewerkzeug mit mindestens einem Biegestempel und mindestens einem Biegegesenk,
- ein Sicherheitssystem mit einer Sendevorrichtung, einer Erfassungsvorrichtung und einer Befestigungseinheit mit je einer Befestigungsvorrichtung für die Sendevorrichtung und die Erfassungsvorrichtung, wobei
- die Befestigungsanordnungen jeweils am oberen Pressbalken voneinander beabstandet in einem Stirnendbereich desselben angeordnet sind.

Als Sicherheitssystem, insbesondere deren Befestigungseinheit, wird jenes verwendet, welche folgende Bauteilkomponenten umfasst:
- eine Sendevorrichtung zur Emittierung zumindest eines Lichtstrahls,
- eine Erfassungsvorrichtung zum Empfangen des zumindest einen Lichtstrahls,
- eine Befestigungseinheit mit je einer Befestigungsvorrichtung für die Sendevorrichtung und die Erfassungsvorrichtung zum Befestigen der Sendevorrichtung und der Erfassungsvorrichtung in voneinander beabstandeten Stirnendbereich eines oberen Pressbalkens der Biegepresse, wobei
- die Befestigungsvorrichtung zumindest ein Halteelement umfasst, welches zumindest eine Halteelement biegeschlaff und länglich ausgebildet ist und in seiner Längserstreckung voneinander distanziert einen ersten Endbereich und einen zweiten Endbereich aufweist, und
- die Befestigungsvorrichtung weiters eine Stellscheibe umfasst, welche Stellscheibe oberhalb, insbesondere in vertikaler Richtung oberhalb, der Sendevorrichtung oder der Erfassungsvorrichtung ortsfest angeordnet ist, und die Stellscheibe um eine Drehachse mit einer horizontalen Ausrichtung drehbar ist, und
- der erste Endbereich des zumindest einen Halteelements mit der Sendevorrichtung oder der Erfassungsvorrichtung verbunden ist, und
- das zumindest eine Halteelement an der Stellscheibe abgelenkt oder umgelenkt ist und wobei
- der zweite Endbereich des zumindest einen Halteelements mit einem Gegengewichtskörper oder mit einem an einem Ankerpunkt ortsfest gehaltenen elastischen Zugelement verbunden ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsanlage mit einer Biegepresse und schematisch angedeutetem Si-cherheitssystem, in Frontansicht;
- Fig. 2: eine erste mögliche Ausbildung einer Befestigungsvorrichtung des Sicherheitssystems, in Seitenansicht in Richtung auf den oberen Pressbalken;
- Fig. 3: eine zweite mögliche Ausbildung einer Befestigungsvorrichtung des Sicherheitssystems, in Seitenansicht in Richtung auf den oberen Pressbalken;
- Fig. 4: eine weitere mögliche Ausbildung einer Befestigungsvorrichtung des Sicherheitssystems, in Seitenansicht in Richtung auf den oberen Pressbalken.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

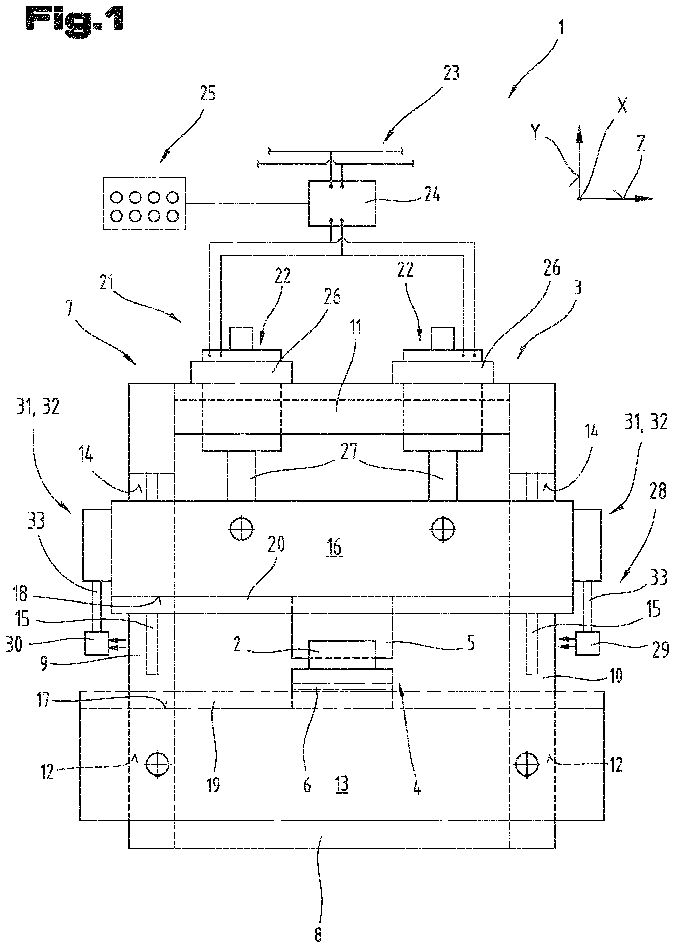

In der Fig. 1 ist eine Fertigungsanlage 1 in stark schematisch vereinfachter Darstellung gezeigt, welche im vorliegenden Fall insbesondere für das Freibiegen von aus Blech zu fertigenden Werkstücken 2 mittels Gesenkbiegen ausgebildet ist.

Die im vorliegenden Fall für das Biegen eingesetzte Fertigungsanlage 1 umfasst eine Biegemaschine, im vorliegenden Ausführungsbeispiel eine Biegepresse 3, insbesondere eine Abkantpresse oder Gesenkbiegepresse, zur Herstellung der Werkstücke 2 oder Werkteile zwischen zumindest einem relativ zueinander verstellbaren Biegewerkzeug 4. Das Biegewerkzeug 4 umfasst im vorliegenden Ausführungsbeispiel zumindest einen Biegestempel 5, zumeist jedoch mehrere Biegestempel 5, und zumindest ein Biegegesenk 6, zumeist jedoch mehrere damit zusammenwirkende Biegegesenke 6. Der zumindest eine Biegestempel 5 ist dabei oberhalb des zu fertigenden Werkstücks 2 an der Biegepresse 3 angeordnet und dort auch entsprechend gehalten, insbesondere geklemmt. Auch das zumindest eine Biegegesenk 6 ist an der Biegepresse 3 gehalten, insbesondere daran geklemmt gehalten.

Als Koordinatensystem wird bei derartigen Biegepressen 3 grundsätzliches als "X"-Richtung jene bezeichnet, welche in einer Horizontalebene sowie in senkrechter Ausrichtung bezüglich der Längserstreckung des Biegewerkzeugs 4, insbesondere dessen Biegestempel 5 sowie Biegegesenk 6 verläuft. Somit ist dies jene Richtung, welche auch der Zufuhrrichtung oder der Entnahmerichtung entspricht. Als "Y"-Richtung wird die Vertikalrichtung verstanden, welche somit in Höhenrichtung des Biegewerkzeugs 4 und weiters in senkrechter Richtung bezüglich der Horizontalebene verläuft. Schließlich wird als "Z"-Richtung jene Richtung verstanden, welche in Längsrichtung bzw. in der Längserstreckung des Biegewerkzeugs 4, insbesondere dessen Biegestempel 5 sowie Biegegesenk 6, verläuft. Damit ist auch die Längserstreckung der vom Biegewerkzeug 4 definierten Biegekante in der "Z"-Richtung verlaufend ausgerichtet.

Ein Maschinengestell 7 der Biegepresse 3 umfasst beispielsweise eine Bodenplatte 8, auf der vertikal aufragend, zueinander in Querrichtung beabstandet und parallel zueinander ausgerichtete Seitenwangen 9, 10 angeordnet sind. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraums für das Umformen des Werkstücks 2 etwa C - förmig ausgebildet sein, wobei an Frontstirnflächen 12 von bodennahen Schenkeln der Seitenwangen 9, 10 ein feststehender, insbesondere auf der Bodenplatte 8 aufstehender, erster Pressbalken 13 oder unterer Pressbalken 13 befestigt ist. Dieser ortsfest angeordnete und feststehende Pressbalken 13 kann auch als Presstisch bezeichnet werden, an welchem Teile des Biegewerkzeugs 4 angeordnet und auch gehalten sind. An Frontstirnflächen 14 von von der Bodenplatte 8 entfernten Schenkeln ist in Linearführungen 15 ein zu dem den Tischbalken bildenden Pressbalken 13 relativ verstellbarer weiterer Pressbalken 16 geführt gelagert. Der Pressbalken 16 kann auch als zweiter Pressbalken oder oberer Pressbalken aber auch als Druckbalken bezeichnet werden.

Auf einander gegenüberliegenden, parallel zueinander verlaufenden Stirnflächen 17, 18 der beiden Pressbalken 13, 16 können Werkzeugaufnahmen 19, 20 zur Bestückung mit dem oder den Biegewerkzeugen 4 angeordnet sein. Das oder die Biegewerkzeuge 4 können auch unter Zwischenschaltung eines nicht näher dargestellten Adapters an den Werkzeugaufnahmen 19, 20 gehalten sein, wobei dies für einen Wechselvorgang einzelner Komponenten oder des gesamten Biegewerkzeugs 4 eher als nicht günstig angesehen wird, jedoch auch eine Möglichkeit darstellen kann.

Die gezeigte Biegepresse 3 weist als Antriebsanordnung 21 für den verstellbaren Pressbalken 16, nämlich den Druckbalken, z.B. zwei mit elektrischer Energie betriebene Antriebsmittel 22 auf, die mit einer aus einem Energienetz 23 angespeisten Steuervorrichtung 24 leitungsverbunden sein können. Über ein mit der Steuervorrichtung 24 kommunikationsverbundenes Eingabeterminal 25 kann beispielsweise der Betrieb der Biegepresse 3, insbesondere auch der Wechselvorgang des Biegewerkzeugs 4, gesteuert werden.

Bei den Antriebsmitteln 22 kann es sich z.B. um elektromotorische Spindeltriebe 26 handeln, wie sie allgemein bekannt sind, von denen Stellmittel 27 für eine reversible Stellbewegung des durch den Druckbalken gebildeten oberen Pressbalkens 16 mit diesem, zum Beispiel antriebsverbunden sind. Unabhängig davon wäre es aber auch noch möglich, das oder die Antriebsmittel 22 durch hydraulisch und/oder pneumatisch betätigbare Stellmittel zu bilden. Dabei können Zylinder-Kolbenanordnungen Anwendung finden. Es wären aber auch andere Antriebsmittel, wie z.B. Exzenterantriebe, Kniehebelantriebe, Zahnstangenantriebe usw. denkbar.

Weiters kann die Fertigungsanlage 1 auch noch einen hier nicht näher dargestellten Manipulator umfassen, welcher von einem Vorratsstapel von zu verformenden bzw. abzukantenden Blechen zumindest ein Stück davon entnimmt und in den Arbeitsbereich bzw. die Bedienseite der Biegepresse 3 verbringt. Der Manipulator kann auch noch dazu dienen oder eingesetzt werden, den Werkzeugwechsel oder eine Lageänderung desselben durchzuführen.

Die Fertigungsanlage 1 umfasst bei diesem Ausführungsbeispiel auch noch ein Sicherheitssystem 28 zur Kontrolle und Überwachung des Biegevorgangs und/oder ob im Arbeitsbereich des oder der Biegewerkzeuge 4 sich ein Gegenstand, insbesondere ein Körperteil einer Bedienperson, befindet. Mittels des Sicherheitssystems 28 kann somit überwacht werden, ob sich z.B. die Hand des Maschinenbedieners im Gefahrenbereich zwischen dem Biegestempel 5 und dem damit zusammenwirkenden Biegegesenk 6 befindet. Ist dies der Fall, wird vom Sicherheitssystems 28 die aufeinander Zubewegung des Biegewerkzeugs 4, insbesondere die Abwärtsbewegung des oberen Pressbalkens 16 hin in Richtung auf den unteren Pressbalken 13, gestoppt. Damit kann ein Einklemmen von einem Körperteil und eine damit einhergehende Verletzung verhindert werden. Derartige Systeme basieren zumeist auf einer optoelektronischen Basis.

Das Sicherheitssystem 28 kann zumindest eine Sendevorrichtung 29 und zumindest eine damit zusammenwirkende Erfassungsvorrichtung 30 umfassen, welche in Längserstreckung der Werkzeugaufnahmen 19, 20 oder der Pressbalken 13, 16 voneinander beabstandet angeordnet sind. Die Erfassungsvorrichtung 30 ist hier als optisches Erfassungsmittel ausgebildet und kann auch als Empfangsvorrichtung bezeichnet werden, welche den von der Sendevorrichtung 29 als Lichtquelle ausgesendeten oder emittierten zumindest einen Lichtstrahl empfängt oder auffängt und nachfolgend gegebenenfalls auswertet.

Bevorzugt ist das Sicherheitssystem 28, insbesondere die Sendevorrichtung 29 und die Erfassungsvorrichtung 30 jeweils am oberen Pressbalken 16 angeordnet, insbesondere mit diesem verbunden. Dazu ist eine Befestigungseinheit 31 mit je einer Befestigungsvorrichtung 32 für die Sendevorrichtung 29 und die Erfassungsvorrichtung 30 vorgesehen. Der Aufbau beider Befestigungsvorrichtungen 32 ist bevorzugt grundsätzlich zueinander gleich gewählt.

Damit wird bei einer relativen Verstellbewegung des oberen Pressbalkens 16 zumindest sowohl die Sendevorrichtung 29 als auch die Erfassungsvorrichtung 30 ständig mitbewegt. Von der Sendevorrichtung 29 werden zumeist mehrere Lichtstrahlen, insbesondere Laserstrahlen, ausgesendet, welche von der Erfassungsvorrichtung 30 aufgenommen und erfasst werden. Dieses Prinzip ist grundsätzlich als bekannt anzusehen, wodurch hier nicht mehr näher darauf eingegangen wird. Bei Unterbrechung von zumindest einem der Lichtstrahlen wird die Verstellbewegung der Biegepresse 3 gestoppt. Die Position der abgegebenen Lichtstrahlen ist in Abhängigkeit von der Arbeitslänge des Biegewerkzeugs 4, insbesondere des für den Biegevorgang vorgesehenen Biegestempels 5, einzustellen.

Eine Relativbewegung zwischen dem oberen Pressbalken 16 und der Sendevorrichtung 29 sowie der Erfassungsvorrichtung 30 ist grundsätzlich nur zu Einstell- und/oder Justiertätigkeiten vorgesehen. Derartige Einstell- und/oder Justiertätigkeiten sind z.B. dann erforderlich, wenn aufgrund eines Werkzeugwechsels eine geänderte Arbeitslänge des Biegestempels 5 vorhanden ist. Die Position des oder der Lichtstrahlen ist zumeist in einem vordefinierten Abstand unterhalb der Arbeitskante des jeweiligen für den Biegevorgang vorgesehenen Biegestempels 5 gewählt.

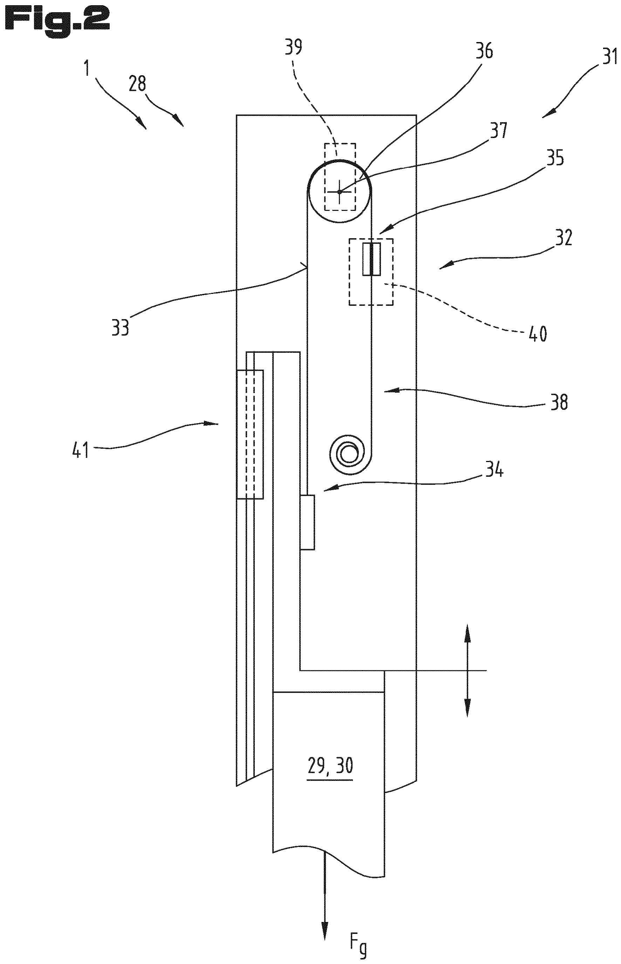

Die Anordnung und Halterung des Sicherheitssystems 28, insbesondere der Sendevorrichtung 29 sowie der Erfassungsvorrichtung 30, am oberen Pressbalken 16 erfolgt mittels der Befestigungseinheit 31 jeweils in einem stirnseitigen Endbereich desselben und ist hier nur schematisch angedeutet. Die beiden Endbereiche oder Längsenden des oberen Pressbalken 16 sind in Richtung der Längserstreckung voneinander distanziert angeordnet. Mögliche unterschiedliche Ausbildungen werden in den nachfolgenden Fig. 2 bis 4 näher beschrieben.

Im Gegensatz zu einer überwiegen starren Befestigung ist nun vorgesehen, dass die Sendevorrichtung 29 und/oder die Erfassungsvorrichtung 30 mittels jeweils den diesen zugeordneten Befestigungsvorrichtungen 32 im Biegebetrieb bei einer Kollision nicht starr, sondern einfach relativ verstellbar bezüglich des oberen Pressbalkens 16 daran gehalten sind. Dies erfolgt durch ein Aufhängen der Sendevorrichtung 29 und/oder der Erfassungsvorrichtung 30 an einem biegsamen, biegeschlaffen länglichen Bauteil, der bei den dabei aufzunehmenden und zu übertragenden Kräften und Lasten dehnungssteif oder dehnungsfest ausgebildet ist. Unter dehnungssteif, dehnungsfest oder zugsteif wird hier verstanden, dass das Halteelement 33 bei den aufzunehmenden und zu übertragenden Zugkräften keine oder nur eine minimale Längsdehnung aufweist. Das Halteelement 33 soll jedoch bei Einwirken einer Druckkraft keine steifen und starren Eigenschaften aufweisen, um dieses ausgehend von seiner geradlinigen Längserstreckung, einfach in eine davon abweichende Lage umformen zu können.

Auf weitere für den Betrieb einer derartigen Biegepresse 3 erforderliche Details, wie beispielsweise Zufuhrvorrichtungen und/oder Kontrollvorrichtungen, wird in der gegenständlichen Beschreibung zur Vermeidung einer unnötigen Länge der Beschreibung verzichtet.

Da der grundsätzliche Aufbau jeder der Befestigungsvorrichtungen 32 gleich ist, wird diese nur für eine Seite des Pressbalkens 16 beschrieben, wobei jene auf der davon gegenüberliegenden Seite des Pressbalkens 16 angeordnete Befestigungsvorrichtung 32 nur spiegelbildlich ausgebildet ist.

In der Fig. 2 ist eine erste mögliche Ausbildung des Sicherheitssystems 28 mit dessen Befestigungsvorrichtung 32 in Stirnansicht auf den Pressbalken 16 gezeigt. Der Einfachheit halber wurden die einzelnen Bauteilkomponenten nur stilisiert vereinfacht dargestellt. Es werden wiederum für gleiche Teile gleiche Bezugszeichen bzw. Bauteilbezeichnungen wie in der vorangegangenen Fig. 1 verwendet. Um unnötige Wiederholungen zu vermeiden, wird auf die Beschreibung in der vorangegangenen Fig. 1 hingewiesen bzw. Bezug genommen. Das Grundkonzept und der Aufbau der Befestigungsvorrichtung 32 kann sowohl für die Sendevorrichtung 29 als auch für die Erfassungsvorrichtung 30 verwendet werden. Deshalb sind hier beide Bezugszeichen sowohl für die Sendevorrichtung 29 als auch die Erfassungsvorrichtung 30 in dieser Figur eingetragen.

Die hier dargestellte Befestigungsvorrichtung 32 der Befestigungseinheit 31 umfasst zumindest ein Halteelement 33 welches seinerseits biegeschlaff sowie länglich ausgebildet ist. Unter biegeschlaff wird verstanden, dass eine Biegung und Ablenkung um eine Scheibe oder dgl. einfach und ohne Kraftaufwand möglich ist, jedoch Zugkräfte übertragen werden können. Eine Übertragung von Druckkräften mittels des Halteelements 33 ist nicht vorgesehen und soll auch nicht stattfinden.

So weist das zumindest eine Halteelement 33 in Richtung seiner Längserstreckung voneinander distanziert einen ersten Endbereich 34 und einen zweiten Endbereich 35 auf. Um Zugkräfte ohne wesentlicher Längsdehnung aufnehmen zu können, soll das zumindest eine Halteelement 33 zugsteif ausgebildet sein. So kann beispielsweise das zumindest eine Halteelement 33 aus der Gruppe von Seilen, Riemen, Bänder, Schnüren, Ketten, ausgewählt sein.

Weiters umfasst die Befestigungsvorrichtung 32 noch eine Stellscheibe 36, welche unter Anderem zum Ändern des Längsverlaufs des zumindest einen Halteelements 33 dient. Damit kann das zumindest eine Halteelement 33 an der Stellscheibe 36 abgelenkt oder umgelenkt werden. Die Stellscheibe 36 ist weiters oberhalb der Sendevorrichtung 29 oder der Erfassungsvorrichtung 30 ortsfest angeordnet. Die Stellscheibe 36 ist ihrerseits um eine Drehachse 37 drehbar, wobei die Drehachse 37 eine horizontale Ausrichtung aufweist. Je nach Verwendungszweck und Einsatzgegebenheit kann die Stellscheibe 36 zwar drehbar gelagert sein, aber z.B. von einer nicht näher dargestellten Bremsvorrichtung an einem freien Drehen gehindert werden. Nach Lösen der Bremsvorrichtung kann die Stellscheibe 36 verdreht und in weiterer Folge eine Vertikalverstellung der Sendevorrichtung 29 oder der Erfassungsvorrichtung 30 durchgeführt werden. Die Anordnung und Halterung der Stellscheibe 36 kann direkt am oberen Pressbalken 16 erfolgen oder aber auch unter Zwischenschaltung eines nicht näher dargestellten Gehäuses oder dergleichen. Weiters kann die Stellscheibe 36 aufgrund der Ablenkung oder Umlenkung des zumindest einen Halteelements 33 an dieser durch die dabei aufgebaute Haftreibungskraft und dem Umschlingungswinkel eine Stellkraft auf das Halteelement 33 übertragen.

Der erste Endbereich 34 des zumindest einen Halteelements 33 ist entweder mit der Sendevorrichtung 29 oder mit der Erfassungsvorrichtung verbunden. Damit kann eine Zugkraft und/oder eine Rückhaltekraft ausgehend vom Halteelement 33 auf die Sendevorrichtung 29 oder die Erfassungsvorrichtung 30 ausgeübt oder übertragen werden. Durch die hängende Anordnung der Sendevorrichtung 29 oder der Erfassungsvorrichtung 30 am Halteelement 33 können diese jeweils frei schwebend bezüglich des Pressbalkens 16 an diesem gehalten werden. Betrachtet man den Längsverlauf des Halteelementes 33 verläuft dieser ausgehend von der Befestigungsstelle an der Sendevorrichtung 29 oder der Erfassungsvorrichtung 30 hin zu der oberhalb angeordneten Stellscheibe 36. Nach dem Ablenken oder Umlenken des Halteelements 33 an der Stellscheibe 36 kann der zweite Endbereich 35 des zumindest einen Halteelements 33 mit einem an einem Ankerpunkt ortsfest gehaltenen elastischen Zugelement 38 verbunden sein.

Das elastische Zugelement 38 dient dazu, das Halteelement 33 zumindest an einem Teilabschnitt der Stellscheibe 36 über einen Umschlingungswinkel anzulegen und so für eine mögliche Antriebsbewegung eine ausreichende Haftreibungskraft und damit verbundene Haftreibung zwischen der Stellscheibe 36 und dem Halteelement 33 aufbauen zu können. Um ein Antriebsmoment zur relativen Verlagerung der Sendevorrichtung 29 oder der Erfassungsvorrichtung 30 relativ bezüglich des Pressbalkens 16 durchführen zu können, kann die Stellscheibe 36 mit einer Antriebsvorrichtung 39 bewegungsverbunden sein. Mittels der Antriebsvorrichtung 39 kann so ein Drehmoment auf die Stellscheibe 36, welche dann eine Antriebsscheibe oder ein Antriebselement ausbildet, weiter auf das daran anliegende Halteelement 33 übertragen werden. Bei Stillstand der Antriebsvorrichtung 39 soll auch eine Drehung der Stellscheibe 36 unterbunden sein, um so eine relative ortsfeste Position bezüglich des oberen Pressbalkens 16 festzulegen. Bei blockierter Antriebsvorrichtung 39 steht grundsätzlich die Stellscheibe 36 in rotatorischem Sinn still und ist ortsfest positioniert gehalten. Vom elastisch ausgebildeten Zugelement 38 wird ausgehend von diesem eine Zugkraft auf das Halteelement 33 aufgebracht, um so das Halteelement 33 an zumindest einem Teilabschnitt des Umfangs der Stellscheibe 36 anzudrücken.

Von der Sendevorrichtung 29 oder der Erfassungsvorrichtung 30 wird jeweils aufgrund von deren Eigenmasse eine Gewichtskraft F_{g} in den ersten Endbereich 34 des Halteelementes 33 eingebracht. Da auch vom elastischen Zugelement 38 auf das Halteelement 33 in seinem zweiten Endbereich 35 eine weitere Zugkraft eingebracht wird, wird das Halteelement 33 in seinem Anlagebereich an der Stellscheibe 36 an diese angedrückt und eine Haftreibungskraft aufgebaut. Soll ein Einstell- und/oder Justiervorgang der Sendevorrichtung 29 oder der Erfassungsvorrichtung 30 durchgeführt werden, ist ausgehend von der Antriebsvorrichtung 39 die damit in Antriebsverbindung stehende Stellscheibe 36 anzutreiben, wobei je nach gewählter Drehrichtung ein Anheben oder Absenken der Sendevorrichtung 29 oder der Erfassungsvorrichtung 30 relativ bezüglich des oberen Pressbalkens 16 erfolgt. Ist der Justiervorgang abgeschlossen, verbleibt die Sendevorrichtung 29 oder die Erfassungsvorrichtung 30 jeweils relativ bezüglich des oberen Pressbalkens 16 ortsfest angeordnet.

Im Zuge des durchzuführenden Biegevorgangs wird der obere Pressbalken 16 in Richtung auf den darunter angeordneten Pressbalken 13 verstellt. Kommt die Sendevorrichtung 29 oder die Erfassungsvorrichtung 30 bei der gleichzeitigen Abwärtsbewegung mit dem oberen Pressbalken 16 zu einer Anlage an einem Gegenstand oder einem Körperteil einer Bedienperson, kann aufgrund der biegeschlaffen Ausbildung des Halteelements 33 keine zusätzliche Druckkraft ausgehend vom oberen Pressbalken 16 auf die Sendevorrichtung 29 oder die Erfassungsvorrichtung 30 ausgeübt werden. Somit kommt es bei einer Kollision mit einem zuvor beschriebenen Fremdkörper im Maximalfall nur zu einer Übertragung jener Kraft, welche aus der Eigenmasse der Sendevorrichtung 29 oder der Erfassungsvorrichtung 30 resultiert. Zur Eigenmasse der Sendevorrichtung 29 oder der Erfassungsvorrichtung 30 zählen auch noch die Eigenmassen von möglichen Führungselementen, Gehäusen oder dergleichen, welche gemeinsam mit der Sendevorrichtung 29 oder der Erfassungsvorrichtung 30 vom Halteelement 33 aufzunehmen sind.

Die vom elastischen Zugelement 38 ausgeübte Zugkraft auf das Halteelement 33 dient auch noch als Gewichtsausgleich bezüglich der Eigenmasse der Sendevorrichtung 29 oder Erfassungsvorrichtung 30. Die dabei aufgebrachte oder erzeugte Zugkraft des elastischen Zugelements 38 soll gleich oder kleiner der von der Eigenmasse der Sendevorrichtung 29 oder Erfassungsvorrichtung 30 ausgeübten Gewichtskraft sein. Der untere und somit kleinere Wert der aufgebauten Zugkraft kann beispielsweise in einem Wertebereich mit einem unteren Wert von 30% und einem oberen Wert von 60% der Gewichtskraft der Eigenmasse der Sendevorrichtung 29 oder Erfassungsvorrichtung 30 liegen.

Unabhängig davon wäre es aber auch möglich, anstatt des elastischen Zugelements 38 den zweiten Endbereich 35 des zumindest einen Halteelements 33 mit einem Gegengewichtskörper 40 zu verbinden. Dies ist in strichlierten Linien angedeutet. Damit kann auch ein Gewichtsausgleich und ein sicheres Andrücken oder Anlegen des Halteelements 33 am Umfang oder einem Teilumfang der Stellscheibe 36 bewirkt werden. Dabei soll auch der Gegengewichtskörper 40 eine Eigenmasse aufweisen, welche gleich oder kleiner der Eigenmasse der Sendevorrichtung 29 oder der Erfassungsvorrichtung 30 ist. Die von der Eigenmasse des Gegengewichtskörpers aufgebaute Gewichtskraft soll in den gleichen Grenzen liegen, wie dies zuvor für die vom elastischen Zugelement 38 aufgebaute Zugkraft beschrieben worden ist.

Das zuvor beschriebene elastische Zugelement 38 kann beispielsweise aus der Gruppe von Rollfeder, Spiralfeder, Schraubenfeder, Gummiband, Gasfeder, Pneumatikzylinder, Hydraulikzylinder ausgewählt sein. Bei der Wahl von Zylindern sollen diese nicht angesteuert sein, sondern nur mit dem Betätigungsmittel vorgespannt sein.

Weiter ist hier noch angedeutet, dass die Befestigungsvorrichtung 32 auch noch eine Führungsvorrichtung 41 umfassen kann. Mittels der Führungsvorrichtung 41 kann die Sendevorrichtung 29 oder die Erfassungsvorrichtung 30 für die Durchführung der Einstell- und/oder Justiervorgänge geführt werden. Die Führungsrichtung erfolgt dabei insbesondere in vertikaler Richtung. Darüber hinaus kann die Führungsvorrichtung 41 auch noch dazu dienen, ein Pendeln der Sendevorrichtung 29 oder der Erfassungsvorrichtung 30 zu dämpfen oder vollständig zu unterbinden, da diese grundsätzlich freihängend am Halteelement 33 bis hin zur Stellscheibe 36 angeordnet sind. Weiters kann damit aber auch eine drehfreie Halterung am zumindest einen Halteelement 33 erzielt werden. Die mögliche Verstellbewegung bzw. Verstellrichtung der Sendevorrichtung 29 oder der Erfassungsvorrichtung 30 ist durch einen Doppelpfeil angedeutet.

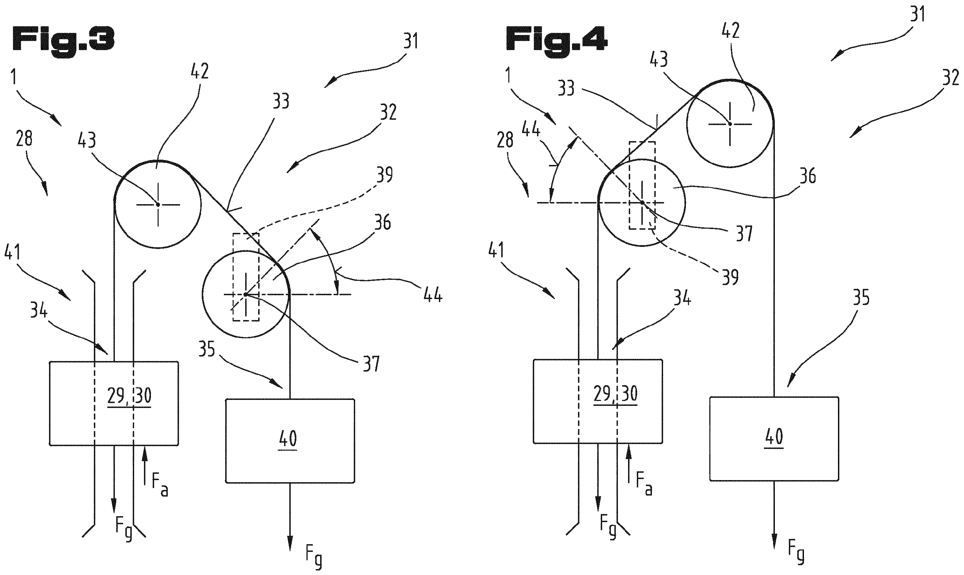

In der Fig. 3 ist eine zweite mögliche Ausbildung des Sicherheitssystems 28 mit dessen Befestigungsvorrichtung 32 in Stirnansicht auf den Pressbalken 16 gezeigt. Der Einfachheit halber wurden auch hier die einzelnen Bauteilkomponenten nur stilisiert vereinfacht dargestellt. Weiters werden wiederum für gleiche Teile gleiche Bezugszeichen bzw. Bauteilbezeichnungen wie in den vorangegangenen Fig. 1 und 2 verwendet. Um unnötige Wiederholungen zu vermeiden, wird auf die Beschreibung in den vorangegangenen Fig. 1 und 2 hingewiesen bzw. Bezug genommen. Das Grundkonzept und der Aufbau der Befestigungsvorrichtung 32 kann sowohl für die Sendevorrichtung 29 als auch für die Erfassungsvorrichtung 30 verwendet werden. Deshalb sind hier beide Bezugszeichen sowohl für die Sendevorrichtung 29 als auch die Erfassungsvorrichtung 30 in dieser Figur eingetragen.

Die hier dargestellte Befestigungsvorrichtung 32 der Befestigungseinheit 31 umfasst wiederum zumindest ein Halteelement 33 mit seinem ersten Endbereich 34 und seinem zweiten Endbereich 35. Weiters umfasst die Befestigungsvorrichtung 32 auch noch die Stellscheibe 36, welche ihrerseits mit der Antriebsvorrichtung 39 in Antriebsverbindung steht. Der erste Endbereich 34 des Halteelements 33 ist mit der Sendevorrichtung 29 oder der Erfassungsvorrichtung 30 verbunden. Der zweite Endbereich 35 steht nach der Ablenkung des zumindest einen Halteelements 33 mit dem Gegengewichtskörper 40 in Verbindung. Möglich ist auch wiederum die Anordnung einer Führungsvorrichtung 41 für die Sendevorrichtung 29 oder die Erfassungsvorrichtung 30.

Zum zusätzlichen Ablenken oder Umlenken des zumindest einen Halteelements 33 ist hier zusätzlich zur Stellscheibe 36 noch eine Umlenkscheibe 42 vorgesehen. Die Umlenkscheibe 42 ist um eine eigene Drehachse 43 frei drehbar, wobei die weitere Drehachse 43 eine parallele Ausrichtung bezüglich der Drehachse 37 der Stellscheibe 36 aufweist.

Das zumindest eine Halteelement 33 verläuft zuerst ausgehend von der Sendevorrichtung 29 oder der Erfassungsvorrichtung 30 in vertikaler Richtung nach oben hin zur Umlenkscheibe 42 und wird an dieser in Richtung auf die Stellscheibe 36 abgelenkt. Je nach relativer Lage der Umlenkscheibe 42 bezüglich der Stellscheibe 36 kann ein Umschlingungswinkel 44 des Halteelements 33 an der Stellscheibe 36 festgelegt werden.

Im vorliegenden Ausführungsbeispiel weisen entweder die Sendevorrichtung 29 und der Gegengewichtskörper 40 jeweils die gleiche Eigenmasse auf oder die Erfassungsvorrichtung 30 und der Gegengewichtskörper 40. Da die von der Sendevorrichtung 29 oder der Erfassungsvorrichtung 30 erzeugte Gewichtskraft gleich der vom Gegengewichtskörper 40 erzeugten Gewichtskraft ist, ist diese jeweils mit einem Pfeil mit der Bezeichnung "F_{g}" eingetragen. Aufgrund des Reibwertes bzw. Reibungskoeffizienten kann in Abhängigkeit vom Wert des Umschlingungswinkels 44 die zwischen dem Halteelement 33 und der Stellscheibe 36 wirkende Haftreibungskraft ermittelt werden.

Wird beispielsweise die Sendevorrichtung 29 oder die Erfassungsvorrichtung 30 relativ bezüglich der Umlenkscheibe 42 angehoben, führt dies zu einer Reduzierung der zuvor beschriebenen, aufgebauten Haftreibungskraft an der Stellscheibe 36. Die Gegenkraft ist mit einem Pfeil mit der Bezeichnung "Fₐ" eingetragen. Je nach durchgeführter Reduzierung der von der Eigenmasse der Sendevorrichtung 29 oder der Erfassungsvorrichtung 30 erzeugten Gewichtskraft ("F_{g}"- "Fₐ"), kommt es in Abhängigkeit vom gewählten Wert des Umschlingungswinkels 44 auch zur Reduzierung der Haftreibungskraft, wodurch das Gleichgewichtsverhältnis zwischen der Sendevorrichtung 29 oder der Erfassungsvorrichtung 30 und dem Gegengewichtskörper 40 nicht mehr gegeben ist. So kann das Halteelement 33 an der rotatorisch feststehenden Stellscheibe 36 rutschen und die Sendevorrichtung 29 oder die Erfassungsvorrichtung 30 wird nach oben in Richtung auf die Umlenkscheibe 42 verstellt. Durch diesen Rutschvorgang und dem Unterschreiten der Haftreibungskraft wird bei weiter anhaltender Reduzierung der Gewichtskraft der Sendevorrichtung 29 oder der Erfassungsvorrichtung 30 diese in Richtung auf die Umlenkscheibe 42 angehoben und der Gegengewichtskörper 40 in gleichem Ausmaß dazu abgesenkt.

Im vorliegenden Ausführungsbeispiel ist die Umlenkscheibe 42 bezüglich des Längsverlaufes des zumindest einen Halteelements 33 zwischen seinem ersten Endbereich 34 und seinem zweiten Endbereich 35 der Stellscheibe 36 vorgeordnet. In vertikaler Richtung gesehen, ist die Umlenkscheibe 42 höher und somit oberhalb der Stellscheibe 36 angeordnet.

In der Fig. 4 ist eine weitere mögliche Ausbildung des Sicherheitssystems 28 mit dessen Befestigungsvorrichtung 32 in Stirnansicht auf den Pressbalken 16 gezeigt. Diese ist in seinem Aufbau dem zuvor in der Fig. 3 beschriebenen Ausführungsbeispiel sehr ähnlich. Deshalb wird nur mehr auf die dazu unterschiedliche Anordnung von Bauteilkomponenten zueinander näher eingegangen.

Der Einfachheit halber wurden auch hier die einzelnen Bauteilkomponenten nur stilisiert vereinfacht dargestellt. Weiters werden wiederum für gleiche Teile gleiche Bezugszeichen bzw. Bauteilbezeichnungen wie in den vorangegangenen Fig. 1 bis 3 verwendet. Um unnötige Wiederholungen zu vermeiden, wird auf die Beschreibung in den vorangegangenen Fig. 1 bis 3 hingewiesen bzw. Bezug genommen. Das Grundkonzept und der Aufbau der Befestigungsvorrichtung 32 kann sowohl für die Sendevorrichtung 29 als auch für die Erfassungsvorrichtung 30 verwendet werden. Deshalb sind auch hier beide Bezugszeichen sowohl für die Sendevorrichtung 29 als auch die Erfassungsvorrichtung 30 in dieser Figur eingetragen.

Die hier dargestellte Befestigungsvorrichtung 32 der Befestigungseinheit 31 umfasst ebenfalls wiederum zumindest ein Halteelement 33 mit seinem ersten Endbereich 34 und seinem zweiten Endbereich 35. Weiters umfasst die Befestigungsvorrichtung 32 auch noch die Stellscheibe 36, welche ihrerseits mit der Antriebsvorrichtung 39 in Antriebsverbindung steht. Der erste Endbereich 34 des Halteelements 33 ist mit der Sendevorrichtung 29 oder der Erfassungsvorrichtung 30 verbunden. Der zweite Endbereich 35 steht nach der Ablenkung des zumindest einen Halteelements 33 mit dem Gegengewichtskörper 40 in Verbindung. Möglich ist auch wiederum die Anordnung einer Führungsvorrichtung 41 für die Sendevorrichtung 29 oder die Erfassungsvorrichtung 30.

Hier ist im Gegensatz zu der zuvor in der Fig. 3 beschriebenen Anordnung vorgesehen, dass die Umlenkscheibe 42 bezüglich des Längsverlaufes des zumindest einen Halteelements 33 zwischen seinem ersten Endbereich 34 und seinem zweiten Endbereich 35 der Stellscheibe 36 nachgeordnet ist. Damit befindet sich die Stellscheibe 36 direkt in vertikaler Richtung gesehen oberhalb der Sendevorrichtung 29 oder der Erfassungsvorrichtung 30. Auch hier kann wiederum durch die relative Lage in vertikaler Richtung der Stellscheibe 36 und der Umlenkscheibe 42 zueinander der Umschlingungswinkel 44 an der Stellscheibe 36 festgelegt und damit die Haftreibungskraft bestimmt werden. Die beiden Drehachsen 37 und 43 weisen jeweils wiederum eine horizontale Ausrichtung auf und sind parallel zueinander verlaufend angeordnet. Durch die Distanzierung in horizontaler Richtung zueinander kann einerseits die Baubreite in "X"-Richtung beeinflusst und festgelegt werden. Mittels der mit der Stellscheibe 36 antriebsverbundenen Antriebsvorrichtung 39 kann einerseits eine rotatorische Lagefixierung der Stellscheibe 36 erfolgen und bei Antrieb die zuvor beschriebene Einstell- und/oder Justiertätigkeit durchgeführt werden.

Zur Durchführung der zuvor beschriebenen Einstell- und/oder Justiertätigkeiten der Sendevorrichtung 29 und der Erfassungsvorrichtung 30 zueinander sowie auf deren vorbestimmte korrekte Position bezüglich des Arbeits- oder Biegebereichs des oder der Biegestempel 5 kann jede der Antriebsvorrichtungen 39 mit der Steuervorrichtung 24 sowie gegebenenfalls auch mit dem Eingabeterminal 25 in Kommunikationsverbindung stehen.

Weiters ist es noch möglich, jede der Befestigungsvorrichtungen in einem nicht näher bezeichneten Gehäuse anzuordnen und dieses jeweils an einem äußeren Stirnendbereich des oberen Pressbalkens 16 anzuordnen, insbesondere daran zu befestigen.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | Befestigungseinheit |
| 2 | Werkstück | 32 | Befestigungsvorrichtung |
| 3 | Biegepresse | 33 | Halteelement |
| 4 | Biegewerkzeug | 34 | erster Endbereich |
| 5 | Biegestempel | 35 | zweiter Endbereich |
| 6 | Biegegesenk | 36 | Stellscheibe |
| 7 | Maschinengestell | 37 | Drehachse |
| 8 | Bodenplatte | 38 | Zugelement |
| 9 | Seitenwange | 39 | Antriebsvorrichtung |
| 10 | Seitenwange | 40 | Gegengewichtskörper |
| 11 | Querverband | 41 | Führungsvorrichtung |
| 12 | Frontstirnfläche | 42 | Umlenkscheibe |
| 13 | Pressbalken | 43 | Drehachse |
| 14 | Frontstirnfläche | 44 | Umschlingungswinkel |
| 15 | Linearführung | | |
| 16 | Pressbalken | | |
| 17 | Stirnfläche | | |
| 18 | Stirnfläche | | |
| 19 | Werkzeugaufnahme | | |
| 20 | Werkzeugaufnahme | | |
| 21 | Antriebsanordnung | | |
| 22 | Antriebsmittel | | |
| 23 | Energienetz | | |
| 24 | Steuervorrichtung | | |
| 25 | Eingabeterminal | | |
| 26 | Spindeltrieb | | |
| 27 | Stellmittel | | |
| 28 | Sicherheitssystem | | |
| 29 | Sendevorrichtung | | |
| 30 | Erfassungsvorrichtung | | |

## Patentansprüche

1. Sicherheitssystem (28) für eine Fertigungsanlage (1) zum Freibiegen oder Prägebiegen von einem aus einem Blech zu fertigenden Werkstück (2) mittels einer Biegepresse (3), umfassend
- eine Sendevorrichtung (29) zur Emittierung zumindest eines Lichtstrahls,
- eine Erfassungsvorrichtung (30) zum Empfangen des zumindest einen Lichtstrahls,
- eine Befestigungseinheit (31) mit je einer Befestigungsvorrichtung (32) für die Sendevorrichtung (29) und die Erfassungsvorrichtung (30) zum Befestigen der Sendevorrichtung (29) und der Erfassungsvorrichtung (30) in voneinander beabstandeten Stirnendbereich eines oberen Pressbalkens (16) der Biegepresse (3),
**dadurch gekennzeichnet,**
- **dass** die Befestigungsvorrichtung (32) zumindest ein Halteelement (33) umfasst, welches zumindest eine Halteelement (33) biegeschlaff und länglich ausgebildet ist und in seiner Längserstreckung voneinander distanziert einen ersten Endbereich (34) und einen zweiten Endbereich (35) aufweist,
- **dass** die Befestigungsvorrichtung (32) weiters eine Stellscheibe (36) umfasst, welche Stellscheibe (36) oberhalb, insbesondere in vertikaler Richtung oberhalb, der Sendevorrichtung (29) oder der Erfassungsvorrichtung (30) ortsfest angeordnet ist, und die Stellscheibe (36) um eine Drehachse (37) mit einer horizontalen Ausrichtung drehbar ist,
- **dass** der erste Endbereich (34) des zumindest einen Halteelements (33) mit der Sendevorrichtung (29) oder der Erfassungsvorrichtung (30) verbunden ist,
- **dass** das zumindest eine Halteelement (33) an der Stellscheibe (36) abgelenkt oder umgelenkt ist und
- **dass** der zweite Endbereich (35) des zumindest einen Halteelements (33) mit einem Gegengewichtskörper (40) oder mit einem an einem Ankerpunkt ortsfest gehaltenen elastischen Zugelement (38) verbunden ist.

2. Sicherheitssystem (28) nach Anspruch 1, **dadurch gekennzeichnet, dass** das zumindest eine Halteelement (33) zugsteif, insbesondere dehnungsfest, ausgebildet ist.

3. Sicherheitssystem (28) nach Anspruch 1 oder 2, **dadurch gekennzeichnet, dass** das zumindest eine Halteelement (33) aus der Gruppe von Seilen, Riemen, Bändern, Schüren, Ketten ausgewählt ist.

4. Sicherheitssystem (28) nach einem der vorhergehenden Ansprüche, **dadurch gekennzeichnet, dass** der Gegengewichtskörper (40) eine Eigenmasse aufweist, welche gleich oder kleiner der Eigenmasse der Sendevorrichtung (29) oder der Erfassungsvorrichtung (30) ist.

5. Sicherheitssystem (28) nach einem der vorhergehenden Ansprüche, **dadurch gekennzeichnet, dass** das elastische Zugelement (38) aus der Gruppe von Rollfeder, Spiralfeder, Schraubenfeder, Gummiband, Gasfeder, Pneumatikzylinder, Hydraulikzylinder ausgewählt ist.

6. Sicherheitssystem (28) nach einem der vorhergehenden Ansprüche, **dadurch gekennzeichnet, dass** die Stellscheibe (36) mit einer Antriebsvorrichtung (39) in Antriebsverbindung steht.

7. Sicherheitssystem (28) nach einem der vorhergehenden Ansprüche, **dadurch gekennzeichnet, dass** die Befestigungsvorrichtung (32) zusätzlich zur Stellscheibe (36) eine Umlenkscheibe (42) umfasst, an welcher Umlenkscheibe (42) das zumindest eine Halteelement (33) ebenfalls abgelenkt oder umgelenkt ist.

8. Sicherheitssystem (28) nach Anspruch 7, **dadurch gekennzeichnet, dass** die Umlenkscheibe (42) bezüglich des Längsverlaufes des zumindest einen Halteelements (33) zwischen seinem ersten Endbereich (34) und seinem zweiten Endbereich (35) der Stellscheibe (36) vorgeordnet ist.

9. Sicherheitssystem (28) nach Anspruch 7, **dadurch gekennzeichnet, dass** die Umlenkscheibe (42) bezüglich des Längsverlaufes des zumindest einen Halteelements (33) zwischen seinem ersten Endbereich (34) und seinem zweiten Endbereich (35) der Stellscheibe (36) nachgeordnet ist.

10. Sicherheitssystem (28) nach einem der Ansprüche 7 bis 9, **dadurch gekennzeichnet, dass** sowohl die Stellscheibe (36) als auch die Umlenkscheibe (42) bezüglich des Längsverlaufes des zumindest einen Halteelements (33) zwischen seinem ersten Endbereich (34) und seinem zweiten Endbereich (35) auf der gleichen Seite des Halteelements (33) angeordnet sind.

11. Sicherheitssystem (28) nach einem der vorhergehenden Ansprüche , **dadurch gekennzeichnet, dass** die Befestigungsvorrichtung (32) weiters eine Führungsvorrichtung (41) umfasst, mittels welcher Führungsvorrichtung (41) die Sendevorrichtung (29) oder die Erfassungsvorrichtung (30) geführt, insbesondere in vertikaler Richtung geführt, ist.

12. Fertigungsanlage (1), insbesondere für das Freibiegen oder Prägebiegen von einem aus einem Blech zu fertigenden Werkstück (2), umfassend
- eine Biegepresse (3), insbesondere Abkantpresse, mit einem Maschinengestell (7), einem unteren Pressbalken (13), einem oberen Pressbalken (16) sowie an den Pressbalken (13, 16) angeordneten oder ausgebildeten Werkzeugaufnahmen (19, 20),
- zumindest ein Biegewerkzeug (4) mit mindestens einem Biegestempel (5) und mindestens einem Biegegesenk (6),
- ein Sicherheitssystem (28) mit einer Sendevorrichtung (29), einer Erfassungsvorrichtung (30) und einer Befestigungseinheit (31) mit je einer Befestigungsvorrichtung (32) für die Sendevorrichtung (29) und die Erfassungsvorrichtung (30), wobei
- die Befestigungsanordnungen (32) jeweils am oberen Pressbalken (16) voneinander beabstandet in einem Stirnendbereich desselben angeordnet sind,
**dadurch gekennzeichnet,**
- **dass** das Sicherheitssystem (28) nach einem der vorhergehenden Ansprüche ausgebildet ist.

## Claims

1. A safety system (28) for a production installation (1) for air bending or bottom bending of a workpiece (2) to be manufactured from a sheet metal by means of a bending press (3), comprising
- a transmission device (29) for emitting at least one light beam,
- a detection device (30) for receiving the at least one light beam,
- a securing unit (31) with one securing device (32) for each the transmission device (29) and the detection device (30) for securing the transmission device (29) and the detection device (30) in end face regions spaced from one another of an upper press beam (16) of the bending press (3),
**characterized in**
- **that** the securing device (32) comprises at least one holding element (33), said at least one holding element (33) being designed to be limp and elongated and comprising a first end region (34) and a second end region (35) distanced from one another in its longitudinal extension,
- **that** the securing device (32) further comprises an adjusting disk (36), said adjusting disk (36) being arranged above, in particular in the vertical direction above, the transmission device (29) or the detection device (30) stationarily, and the adjusting disk (36) being rotatable about a rotation axis (37) with a horizontal orientation,
- **that** the first end region (34) of the at least one holding element (33) is connected to the transmission device (29) or the detection device (30),
- **that** the at least one holding element (33) is deflected or diverted on the adjusting disk (36) and
- **that** the second end region (35) of the at least one holding element (33) is connected to a counterweight body (40) or to an elastic traction element (38) held stationarily on an anchoring point.

2. The safety system (28) according to claim 1, **characterized in that** the at least one holding element (33) is designed to be tensionally rigid, in particular strain-resistant.

3. The safety system (28) according to claim 1 or 2, **characterized in that** the at least one holding element (33) is selected from a group of cables, belts, straps, cords, chains.

4. The safety system (28) according to one of the preceding claims, **characterized in that** the counterweight body (40) has a dead load, which is equal to or smaller than the dead load of the transmission device (29) or the detection device (30).

5. The safety system (28) according to one of the preceding claims, **characterized in that** the elastic traction element (38) is selected from the group of constant force spring, spiral spring, coil spring, elastic band, gas spring, pneumatic cylinder, hydraulic cylinder.

6. The safety system (28) according to one of the preceding claims, **characterized in that** the adjusting disk (36) is drive-connected to a drive device (39).

7. The safety system (28) according to one of the preceding claims, **characterized in that** the securing device (32) additionally to the adjusting disk (36) comprises a deflection disk (42), the at least one holding element (33) also being deflected or diverted on said deflection disk (42).

8. The safety system (28) according to claim 7, **characterized in that** the deflection disk (42) is arranged upstream of the adjusting disk (36) with respect to the longitudinal extension of the at least one holding element (33) between its first end region (34) and its second end region (35).

9. The safety system (28) according to claim 7, **characterized in that** the deflection disk (42) is arranged downstream of the adjusting disk (36) with respect to the longitudinal extension of the at least one holding element (33) between its first end region (34) and its second end region (35).

10. The safety system (28) according to one of claims 7 to 9, **characterized in that** both the adjusting disk (36) and the deflection disk (42) are arranged on the same side of the holding element (33) with respect to the longitudinal extension of the at least one holding element (33) between its first end region (34) and its second end region (35).

11. The safety system (28) according to one of the preceding claims, **characterized in that** the securing device (32) further comprises a guide device (41), the transmission device (29) or the detection device (30) being guided, in particular guided in the vertical direction, by means of said guide device (41).

12. A production installation (1), in particular for air bending or bottom bending of a workpiece to be manufactured from a sheet metal (2), comprising
- a bending press (3), in particular a press brake, with a machine frame (7), a lower press beam (13), an upper press beam (16) as well as tool holders (19, 20) arranged or formed on the press beams (13, 16),
- at least one bending tool (4) with at least one bending punch (5) and at least one bending die (6),
- a safety system (28) with a transmission device (29), a detection device (30) and a securing unit (31) with one securing device (32) for each the transmission device (29) and the detection device (30), wherein
- the securing devices (32) are each arranged spaced from one another on the upper press beam (16) in an end face region thereof,
**characterized in that**
- the safety system (28) is designed according to one of the preceding claims.

## Revendications

1. Système de sécurité (28) pour une installation de fabrication (1) pour le pliage en l'air ou le pliage en frappe d'une pièce (2) à fabriquer à partir d'une tôle, au moyen d'une presse plieuse (3), comprenant
- un dispositif d'émission (29) pour l'émission d'au moins un rayon lumineux,
- un dispositif de détection (30) pour la réception de l'au moins un rayon lumineux,
- une unité de fixation (31), avec un dispositif de fixation (32) respectivement pour le dispositif d'émission (29) et le dispositif de détection (30) pour la fixation du dispositif d'émission (29) et du dispositif de détection (30) au niveau de parties d'extrémités frontales, distantes entre elles, d'une barre de presse supérieure (16) de la presse plieuse (3),
**caractérisé en ce que**
- le dispositif de fixation (32) comprend au moins un élément de maintien (33), cet au moins un élément de maintien (33) étant conçu de manière flexible et allongée et comprenant, dans son extension longitudinale, distantes entre elles, une première partie d'extrémité (34) et une deuxième partie d'extrémité (35),
- le dispositif de fixation (32) comprend en outre une poulie de réglage (36), cette poulie de réglage (36) étant disposée au-dessus, plus particulièrement au-dessus dans une direction verticale, du dispositif d'émission (29) ou du dispositif de détection (30), de manière fixe, et la poulie de réglage (36) peut tourner autour d'un axe de rotation (37) avec une orientation horizontale,
- la première partie d'extrémité (34) de l'au moins un élément de maintien (33) est reliée avec le dispositif d'émission (29) ou le dispositif de détection (30),
- l'au moins un élément de maintien (33) est dévié ou renvoyé au niveau de la poulie de réglage (36) et
la deuxième partie d'extrémité (35) de l'au moins un élément de maintien (33) est reliée avec un corps de contre-poids (40) ou avec un élément de traction (38) élastique de façon à être maintenue de manière stationnaire au niveau d'un point d'ancrage.

2. Système de sécurité (28) selon la revendication 1, **caractérisé en ce que** l'au moins un élément de maintien (33) est rigide en traction, plus particulièrement résistant à la dilatation.

3. Système de sécurité (28) selon la revendication 1 ou 2, **caractérisé en ce que** l'au moins un élément de maintien (33) est sélectionné dans le groupe constitué de câbles, de courroies, de bandes, de cordons, de chaînes.

4. Système de sécurité (28) selon l'une des revendications précédentes, **caractérisé en ce que** le corps de contre-poids (40) présente une masse propre qui est inférieure ou égale à la masse propre du dispositif d'émission (29) et du dispositif de détection (30).

5. Système de sécurité (28) selon l'une des revendications précédentes, **caractérisé en ce que** l'élément de traction (38) élastique est sélectionné dans le groupe constitué d'un ressort circulaire, d'un ressort à spirale, d'un ressort hélicoïdal, d'une bande de caoutchouc, d'un ressort à gaz, d'un vérin pneumatique, d'un vérin hydraulique.

6. Système de sécurité (28) selon l'une des revendications précédentes, **caractérisé en ce que** la poulie de réglage (36) est en liaison d'entraînement avec un dispositif d'entraînement (39).

7. Système de sécurité (28) selon l'une des revendications précédentes, **caractérisé en ce que** le dispositif de fixation (32) comprend, en plus de la poulie de réglage (36), une poulie de renvoi (42), l'au moins un élément de maintien (33) étant également dévié ou renvoyé au niveau de cette poulie de renvoi (42).

8. Système de sécurité (28) selon la revendication 7, **caractérisé en ce que** la poulie de renvoi (42) est disposée en amont, par rapport à l'extension longitudinale de l'au moins un élément de maintien (33), entre sa première partie d'extrémité (34) et sa deuxième partie d'extrémité (35), de la poulie de réglage (36).

9. Système de sécurité (28) selon la revendication 7, **caractérisé en ce que** la poulie de renvoi (42) est disposée en aval, par rapport à l'extension longitudinale de l'au moins un élément de maintien (33), entre sa première partie d'extrémité (34) et sa deuxième partie d'extrémité (35), de la poulie de réglage (36).

10. Système de sécurité (28) selon l'une des revendications 7 à 9, **caractérisé en ce que** la poulie de réglage (36) ainsi que la poulie de renvoi (42) sont disposées, par rapport à l'extension longitudinale de l'au moins un élément de maintien (33), entre sa première partie d'extrémité (34) et sa deuxième partie d'extrémité (35), du même côté de l'élément de maintien (33).

11. Système de sécurité (28) selon l'une des revendications précédentes, **caractérisé en ce que** le dispositif de fixation (32) comprend en outre un dispositif de guidage (41), ce dispositif de guidage (41) permettant de guider le dispositif d'émission (29) ou le dispositif de détection (30), plus particulièrement dans la direction verticale.

12. Installation de fabrication (1), plus particulièrement pour le pliage en l'air ou le pliage en frappe d'une pièce (2) à fabriquer à partir d'une tôle, comprenant
- une presse plieuse (3), plus particulièrement une presse de pliage, avec un bâti de machine (7), une barre de presse inférieure (13), une barre de presse supérieure (16) ainsi que des porte-outils (19, 20) disposés ou réalisés sur les barres de presse (13, 16),
- au moins un outil de pliage (4) avec au moins un poinçon de pliage (5) et au moins une matrice de pliage (6),
- un système de sécurité (28) avec un dispositif d'émission (29), un dispositif de détection (30) et une unité de fixation (31) avec un dispositif de fixation (32) respectif pour le dispositif d'émission (29) et le dispositif de détection (30),
- les dispositifs de fixation (32) étant disposées, de manière distante entre eux, sur la barre de presse supérieure (16), dans une partie d'extrémité frontale de celle-ci, **caractérisée en ce que**
- le système de sécurité (28) est conçu selon l'une des revendications précédentes.
